# NEW EUROPEAN PATENT SPECIFICATION

(11) **EP 2 464 772 B2**
(45) Date of publication and mention of the opposition decision: **02.12.2020**
(45) Mention of the grant of the patent: 25.12.2013
(21) Application number: 10744635.3
(22) Date of filing: 06.08.2010
(51) Int. Cl.: D04H 1/64, C08B 37/00, C08L 5/00, C03C 25/32

(54) **CURABLE FIBERGLASS BINDER COMPRISING AMINE SALT OF INORGANIC ACID**
HÄRTBARER GLASFASERBINDER MIT EINEM AMINSALZ AUS EINER ANORGANISCHEN SÄURE
LIANT DURCISSABLE POUR FIBRE DE VERRE COMPRENANT UN SEL D AMINE D ACIDE INORGANIQUE

(30) Priority: 19.08.2009 US 543586; 19.08.2009 US 543625; 11.08.2009 US 539211; 11.08.2009 US 539263; 19.08.2009 US 543574; 19.08.2009 US 543607
(43) Date of publication of application: 20.06.2012
(73) Proprietor: Johns Manville, Denver, CO 80202 (US)
(72) Inventor: SHOOSHTARI, Kiarash, Alavi, Littleton CO 80127 (US); ECKERT, Bernhard, 97896 Freudenberg-Boxtal (DE); CHRISTENSEN, Bernd, 97877 Wertheim (DE); NANDI, Souvik, Arvada CO 80003 (US); ASRAR, Jawed, Englewood CO 80111 (US); ZHANG, Mingfu, Highlands Ranch CO (US)
(74) Representative: Dörr, Klaus
(86) International application number: PCT/US2010/044686
(87) International publication number: WO 2011/019597

(56) References cited:
- EP-A1- 2 223 941
- DE-A1-102004 033 561
- GB-A- 698 353
- GB-A- 2 451 719
- US-A- 2 106 486
- US-A- 2 671 059
- US-A1- 2007 027 283
- US-A1- 2008 160 854

## Description

### BACKGROUND

The subject invention pertains to an improved binding composition for use with fiberglass. More specifically, the invention pertains to an improved curable composition comprising a mixture of an aldehyde or ketone and a salt of an inorganic acid. Wherein the amine is a di- or multifunctional primary or secondary amine.

Fiberglass binders have a variety of uses ranging from stiffening applications where the binder is applied to woven or non-woven fiberglass sheet goods and cured, producing a stiffer product; thermo-forming applications wherein the binder resin is applied to a sheet or lofty fibrous product, following which it is dried and optionally B-staged to form an intermediate but yet curable product; and to fully cured systems such as building insulation.

Fiberglass binders used in the present sense should not be confused with matrix resins which are an entirely different and non-analogous field of art. While sometimes termed "binders", matrix resins act to fill the entire interstitial space between fibers, resulting in a dense, fiber reinforced product where the matrix must translate the fiber strength properties to the composite, whereas "binder resins" as used herein are not fully space-filling, but rather coat only the fibers, and particularly the junctions of fibers. Fiberglass binders also cannot be equated with paper or wood product "binders" where the adhesive properties are tailored to the chemical nature of the cellulosic substrates. Many such resins are not suitable for use as fiberglass binders. One skilled in the art of fiberglass binders would not look to cellulosic binders to solve any of the known problems associated with fiberglass binders.

Binders useful in fiberglass products generally require a low viscosity in the uncured state, yet possess characteristics so as to form a rigid thermoset polymeric binder for the glass fibers when cured. A low binder viscosity in the uncured state is required to allow the mat to be sized correctly. Also, viscous binders commonly tend to be tacky or sticky and hence they lead to the accumulation of fiber on the forming chamber walls. This accumulated fiber may later fall onto the mat causing dense areas and product problems.

From among the many thermosetting polymers, numerous candidates for suitable thermosetting fiberglass binder resins exist. However, binder-coated fiberglass products are often of the commodity type, and thus cost becomes a driving factor, generally ruling out resins such as thermosetting polyurethanes, epoxies, and others. Due to their excellent cost/performance ratio, the resins of choice in the past have been phenol-formaldehyde resins. Phenol-formaldehyde resins can be economically produced, and can be extended with urea prior to use as a binder in many applications. Such urea-extended phenol-formaldehyde binders have been the mainstay of the fiberglass industry for years, for example.

Over the past several decades however, minimization of volatile organic compound emissions (VOCs) and hazardous air pollutants (HAPS) both on the part of the industry desiring to provide a cleaner environment, as well as by Federal regulation, has led to extensive investigations into not only reducing emissions from the current formaldehyde-based binders, but also into candidate replacement binders. For example, subtle changes in the ratios of phenol to formaldehyde in the preparation of the basic phenol-formaldehyde resole resins, changes in catalysts, and addition of different and multiple formaldehyde scavengers, has resulted in considerable improvement in emissions from phenol-formaldehyde binders as compared with the binders previously used. However, with increasingly stringent Federal regulations, more and more attention has been paid to alternative binder systems which are free from formaldehyde.

One such candidate binder system employs polymers of acrylic acid as a first component, and a polyol such as triethanolamine, glycerine, or a modestly oxyalkylated glycerine as a curing or "crosslinking" component. The preparation and properties of such poly(acrylic acid)-based binders, including information relative to the VOC emissions, and a comparison of binder properties versus urea-formaldehyde binders is presented in "Formaldehyde-Free Crosslinking Binders For Non-Wovens," Charles T. Arkins et al., TAPPI Journal, Vol. 78, No. 11, pages 161-168, November 1995. The binders disclosed by the Arkins article, appear to be B-stageable as well as being able to provide physical properties similar to those of urea/formaldehyde resins.

U.S. Pat. No. 5,340,868 discloses fiberglass insulation products cured with a combination of a polycarboxy polymer, a-hydroxyalkylamide, and at least one trifunctional monomeric carboxylic acid such as citric acid. The specific polycarboxy polymers disclosed are poly(acrylic acid) polymers. See also, U.S. Pat. No. 5,143,582.

U.S. Pat. No. 5,318,990 discloses a fibrous glass binder which comprises a polycarboxy polymer, a monomeric trihydric alcohol and a catalyst comprising an alkali metal salt of a phosphorous-containing organic acid.

U.S. 2007/0142596 discloses binders comprised of a mixture of Maillard reactants. The reactants comprise a monosaccharide and an ammonium salt of a polycarboxylic acid.

Published European Patent Application EP 0 583 086 A1 appears to provide details of polyacrylic acid binders whose cure is catalyzed by a phosphorus-containing catalyst system as discussed in the Arkins article previously cited. Higher molecular weight poly(acrylic acids) are stated to provide polymers exhibiting more complete cure. See also U.S. Pat. Nos. 5,661,213; 5,427,587; 6,136,916; and 6,221,973.

GB-A-2,451,719 discloses a curable composition comprising an aldehyde or ketone and an amine salt of an inorganic acid. Similar rapid cure carbohydrate composition comprising one or more ammonium salt of an inorganic acid and at least one carbohydrate are known from EP-A-2,223,941 as well as from DE-A-10 2004 033561 which discloses a curable composition comprising one or more ammonium salt of an inorganic acid and at least one carbohydrate.

Some polycarboxy polymers have been found useful for making fiberglass insulation products. Problems of clumping or sticking of the glass fibers to the inside of the forming chambers during the processing, as well as providing a final product that exhibits the recovery and rigidity necessary to provide a commercially acceptable fiberglass insulation product, have been overcome. See, for example, U.S. Pat. No. 6,331,350. The thermosetting acrylic resins have been found to be more hydrophilic than the traditional phenolic binders, however. This hydrophilicity can result in fiberglass insulation that is more prone to absorb liquid water, thereby possibly compromising the integrity of the product. Also, the thermosetting acrylic resins now being used as binding agents for fiberglass have been found to not react as effectively with silane coupling agents of the type traditionally used by the industry increasing product cost. The addition of silicone as a hydrophobing agent results in problems when abatement devices are used that are based on incineration as well as additional cost. Also, the presence of silicone in the manufacturing process can interfere with the adhesion of certain facing substrates to the finished fiberglass material. Overcoming these problems will help to better utilize polycarboxy polymers in fiberglass binders.

### SUMMARY OF THE INVENTION

A curable composition for use in the binding of fiberglass is provided as defined in claim 1. The preferred acid is phosphoric acid. This composition upon curing is capable of forming a water-insoluble binder which exhibits good adhesion to glass.

A process for binding fiberglass is provided as defined in claim 16. Thereafter the composition is cured while present as a coating on the fiberglass to form a water-insoluble binder which exhibits good adhesion to the fiberglass.

In a preferred embodiment the resulting fiberglass product is a fiberglass mat as facer. In other embodiments the fiberglass product is a microglass-based substrate useful when forming a printed circuit board, battery separator, filter stock, or reinforcement scrim.

Accordingly, in one aspect the present invention provides a novel, non-phenol-formaldehyde binder.

Another aspect of the invention provides a novel fiberglass binder which provides advantageous flow properties, the possibility of lower binder usage, the possibility of overall lower energy consumption, elimination of interference in the process by a silicone, and improved overall economics.

Still another aspect of the present invention is to provide a binder for fiberglass having improved economics, while also enjoying improved physical properties. In addition, the present invention increases the sustainable portion of the binder and reduces the dependency on a fossil based source for the resin.

These and other aspects of the present invention will become apparent to the skilled artisan upon a review of the following description and the claims appended hereto.

### DETAILED DESCRIPTION OF PREFERRED EMBODIMENTS

The novel fiberglass binder of the present invention is a curable composition as defined in claim 1. Once the curable composition is applied to fiberglass, it can be cured to provide a strong, water-insoluble binder, exhibiting good adhesion to the glass. The curing of the binder has also been seen to be much faster, thereby adding to the economic benefits of the binder.

Amine-acid salts, which are amine salts, can be used. Any suitable inorganic acid can be used. The acids can be oxygenated acids or non-oxygenated acids. Preferred examples of suitable oxygenated acids include, but are not limited to, phosphoric acid, pyrophosphoric acid, phosphorus acid, sulfuric acid, sulfurous acid, hypochloric acid and chlorate acid. Preferred examples of non-oxygenated acids include, but are not limited to, hydrochloric acid, hydrogen sulfide and phosphine. Phosphoric acid is most preferred.

The salt can be prepared using any conventional technique to create salts of inorganic acids. Amine-acid salts are also preferred, with such salts obtained by reacting the selected amine with the acid in water. This is a very simple and straightforward reaction. The molar ratio of acid functionality to amine functionality is from 1:2 to 2:1.

The amine functionalities are di-functional primary amines. According to the invention ethylene diamine, 1,3-propanediamine, 1,4-butanediamine, 1,5-pentanediamine, 1,6-hexanediamine, and mixtures of these, are used. A particular preferred diamine for use in this embodiment of the invention are 1,4-butanediamine and 1,6-hexanediamine.

To the solution of the amine salt of inorganic acid, the aldehyde or ketone is added. Due to their higher reactivity, aldehydes are preferred to ketones. The composition comprises the amine salt of inorganic acid and the aldehyde and/or ketone. Some small amount of reaction does take place within the composition between the components. However, the reaction is completed during the curing step, followed by the cross-linking reaction of curing.

Suitable aldehydes are reducing sugars such as. Reducing mono, di- and polysaccharides such as glucose, celobrose, maltose, etc. can be used, with reducing monosaccharides, such as glucose being preferred. In particular non-cyclic monosaccharides containing a ketone and/or aldehyde functional group and hydroxyl groups on most or all of the non-carbonyl carbon atoms are preferred. Most preferred monosaccharides are Triose (3 carbon atoms), Tetrose (4 carbon atoms), Pentose (5 carbon atoms), Hexose (6 carbon atoms) and Heptose (7 carbon atoms), in particular glucose (dextrose), fructose (levulose), galactose, xylose and ribose. The term monosaccharide includes also the Aldose or Ketose of the aforementioned monosaccharides. A molar ratio of salt to carbonyl (saccharide) can vary, but is generally in the range of from 1:50 to 50:1. A ratio of 1:20 to 20:1 is more preferred, with a ratio of 1:10 to 10:1 being most preferred.

Preferred examples of suitable ketones include, but are not limited to, acetone, acetyl acetone, 1,3-dihydroxy acetone, benzel, bonzoin and fructose.

The composition when applied to the fiberglass optionally can include adhesion prompters, oxygen scavengers, solvents, emulsifiers, pigments, fillers, anti-migration aids, coalescent aids, wetting agents, biocides, plasticizers, organosilanes, anti-foaming agents, colorants, waxes, suspending agents, anti-oxidants, crosslinking catalysts, secondary crosslinkers, and combinations of these.

It has been found that in particular curable compositions comprising a thickener and/or rheology modifier provide improved properties, such as improved dry tensile strength and hot/wet tensile strength, of fiberglass mats,

The thickener and/or rheology modifier can be polymeric-type materials which are at least partially water soluble or inorganic-type materials that are dispersed in water and which increase the viscosity without substantially modifying the other resin properties. Suitable polymeric thickeners are polysaccharides such as xanthan gum, guar gum, modified starches, neutralized polyacrylic acids, such as sodium polyacrylate, cellulose derivatives, polyacrylamides and polyvinylalcohols. Preferably such thickener and/or rheology modifier have a weight average molecular weight of at least about 100,000 and most typically below about 2,000,000, most preferably of at least about 200,000 and most typically below about 1,000,000. Inorganic thickeners include smectite clay and/or bentonite.

Preferred thickeners are based on hydroxyalkyl cellulose, such as hydroxyethyl cellulose, hydroxypropyl cellulose, hydroxyethyl methyl cellulose, hydroxypropyl methyl cellulose, or carboxyalkyl cellulose, such as carboxymethyl cellulose.

The amount of thickener and/or rheology modifier being present in the curable composition is preferably from 0.01 to 3 weight percent (based on dry mass), most preferably from 0.05 to 0.1 weight percent (based on dry mass).

In addition, it has been found that in particular curable compositions comprising a 10 to 50 weight percent (based on dry mass), most preferably from 20 to 40 weight percent (based on dry mass) of a carbon black dispersion offers excellent blacking performance. The water based carbon black dispersion comprises typically water, 40 to 50 weight percent carbon black, 0.1 to 5 weight percent, preferably 0.1 - 2 weight percent cationic or non-ionic emulsifiers. The water based carbon black dispersion typically may further comprise other additives such as silanes, de-foamer and wetting agents for glass fibers. Instead of using a water based carbon black dispersion being added to the curable compositions, it is also possible to add the carbon black directly to the curable compositions. This, however, is less preferred for handling reasons. The aforementioned curable compositions comprising carbon black provide sufficient blackness when used in so called facer materials, which are fibrous materials predominately based on glass fibers.

The carbon black preferably has particle size of 70nm or less, most preferred from 5nm to 70nm, in particular from 10nm to 30nm. Such carbon black materials are available for example from Brockhuis GmbH & Co KG (Rockwood Pigments NA, Inc).

The fiberglass that has the composition according to the present invention applied to it may take a variety of forms and in a preferred embodiment is Fiberglass mat, preferably facer mats. Use in roofing membranes is also preferable as good tensile and elongation is observed. In other embodiments the fiberglass is a microglass-based substrate useful in applications such as printed circuit boards, battery separators, filter stock, and reinforcement scrim.

The composition of the present invention can be applied to the fiberglass by a variety of techniques like spraying, spin-curtain coating, and dipping-roll coating. In a most preferred embodiment the inventive binder composition is applied to the non-woven using state of the art standard binder application methods as it is widely used in the industry. Water or other solvents can be removed by heating.

Thereafter the composition undergoes curing wherein a strong binder coating is formed which exhibits good adhesion to glass. Such curing can be conducted by heating. Elevated curing temperatures on the order of 100 to 300°C generally are acceptable. Satisfactory curing results are achieved by using standard heating and drying processes as it is commonly used for the glass fiber mat production. Temperatures of around 200°C in an air oven at line speed are typically sufficient.

The amount of cured binder at the conclusion of the curing step commonly is approximately 10 to 30 percent by weight, and most preferably 12 to 20 percent by weight of the total weight of the mat.

The inventive binder composition can be applied to all kind of different fibrous substrates. The fibrous substrate can be a woven or non-woven material, and can comprise filaments, chopped fibers, staples fibers or mixtures thereof. Polymer fibers and glass fibers are preferred, however all kind of fiber materials which are compatible with the inventive binder composition can be used.

The inventive composition is particularly advantageous for glass fiber nonwoven used as facer. The intensive black color allows a large variety of different applications. The inventive composition is particularly suitable for facer mats with a total weight between 20 to 200 g / sqm, having a preferred weight range between 40 to 100 g / sqm total mat weight.

The facer mats used in the present invention typically comprises at least one non-woven web bonded together with the inventive binder. The web comprises chopped continuous glass fibers, of which preferably at least about 90 percent, more preferably at least about 95 percent, and most preferably least about 97 percent have a fiber diameter within the range of 1 to 30µm, most preferred within the range of 7µ to 13µ. For some applications it is preferred to have a very narrow range of about 11 ± 1.5 µm as described in WO2005/005118.

Further, it is also possible that the web has several layers of chopped glass fibers, preferably an outer layer of glass fibers having a diameter from 1 to 10µm and an inner layer of glass fibers having a diameter from 12 to 30µm. In such case the inner layer provides mechanical strength and the outer layer is aesthetically pleasing. More details about such facer materials can be found in EP-A-1,800,853.

In addition, it is also possible that the web comprises of a blend of chopped glass fibers, preferably a major portion of chopped glass fibers have a diameter from 8 to 17µm while the minor portion of the chopped glass fibers have a diameter of less than about 5.5µm. The minor portion is typically present in about 1 to 30 weight percent of the dry weight of the web. More details about such facer materials can be found in WO-A-2005/005117.

Although mixtures of different lengths of chopped strand fibers are contemplated and included within the scope of the invention, it is most preferred that a majority of the fibers have lengths of about 0.51cm to 3.81cm (0.20 inches to 1.5 inches), more preferred from about 0.64cm to 1.52cm (0.25 inches to 0.6 inches).

Chopped strand fibers are readily distinguishable from staple fibers by those skilled in the art. Staple fibers are usually made by processes such as rotary fiberization or flame attenuation of molten glass known in the fiber industry. They typically have a wider range of lengths and fiber diameters than chopped strand fibers. By way of contrast, it would have been anticipated that the smoothest mats would be obtained with a preponderance of fine fibers.

A preferred continuous glass fiber for fibrous web is at least one member selected from the group consisting of E, C, T and S type and sodium borosilicate glasses, and mixtures thereof. As is known in the glass art, C glass typically has a soda-lime-borosilicate composition that provides it with enhanced chemical stability in corrosive environments, and T glass usually has a magnesium aluminosilicate composition and especially high tensile strength in filament form. E glass which is also known as electrical glass typically has a calcium aluminoborosilicate composition and a maximum alkali content of 2.0%. E glass fiber is commonly used to reinforce various articles. The web is preferably composed of C glass or E glass.

If required by the later application, the inventive binder used for the present web may comprise an effective amount of a water repellant, for example, vinyl acrylate latex copolymers or stearylated melamine in typical amounts of about 3 to 10 wt.%.

The web may contain further fillers, pigments, or other inert or active ingredients either throughout the mat or concentrated on a surface. For example, the mat can contain effective amounts of fine particles of limestone, glass, clay, coloring pigments, biocide, fungicide, intumescent material, or mixtures thereof. Such additives may be added for known structural, functional, or aesthetic qualities imparted thereby. These qualities include additional coloration, modification of the structure or texture of the surface, resistance to mold or fungus formation, and fire resistance. Preferably, flame retardants sufficient to provide flame resistance, e.g. according to NFPA Method 701 of the National Fire Protection Association or ASTM Standard E84, Class 1, by the American Society for the Testing of Materials, are added. Biocide is preferably added to the mat to resist fungal growth, its effectiveness being measurable in accordance with ASTM Standard D3273.

Beside the chopped glass fibers, the web may contain a minor portion of other fibers, either in addition to or in replacement of glass fibers, such as mineral fibers, such as mineral wool, slag wool, ceramic fibers, carbon fibers, metal fibers, refractory fibers, or mixtures thereof. Other synthetic or polymer fibers, such as melt blown micro denier fibers or melt spun fibers of polyester, nylon, polyethylene, polypropylene, or the like, may also be used.

The non-woven web used in the facer mat has preferably a total weight ranging from about 20 to 200 g/m², more preferred from 25 to 150g/m², and most preferred from 30 to 100 g/m².

The present invention provides a formaldehyde-free route to form a securely bound formaldehyde-free fiberglass product. The binder composition of the present invention provides advantageous flow properties, the elimination of required pH modifiers such as sulfuric acid and caustic, and improved overall economics and safety. The binder also has the advantages of being stronger and offering lower amounts of relative volatile organic content during curing, which ensures a safer work place and environment. The cure time of the binder is also seen to be much faster and therefore does favor the economics, while reducing the energy consumption during the curing process and lowering the carbon footprint. The binder also contains a high level of sustainable raw materials further reducing the dependency on fossil based sources for the resin.

## Claims

1. A curable composition for use in the binding of fiberglass comprising
(i) an aldehyde or ketone and
(ii) an amine salt of an inorganic acid obtainable by reacting the amine with the acid in water wherein the molar ratio of acid functionality to amine functionality is from 1:2 to 2:1
wherein
(iii) the aldehyde is a reducing sugar and the molar ratio of salt to carbonyl is from 1:10 to 10:1 and,
(iv) the amine is selected from the group consisting of ethylene diamine, 1,3-propanediamine, 1,4-butanediamine, 1,5-pentanediamine, 1,6-hexanediamine and mixtures thereof,
(v) the composition comprises a thickener and/or rheology modifier.

2. The curable composition of claim 1, wherein the thickener is based on polysaccharides, preferably xanthan gum, guar gum, modified starches, neutralized polyacrylic acids, cellulose derivatives, polyacrylamides and/or polyvinylalcohols.

3. The curable composition of claim 1 or 2, wherein the thickener has a weight average molecular weight of at least about 100,000 and most typically below about 2,000,000, most preferably of at least about 200,000 and most typically below about 1,000,000.

4. The curable composition of claim 1 to 3, wherein the thickener is based on hydroxyalkly cellulose, preferably hydroxyethyl cellulose, hydroxypropyl cellulose, hydroxyethyl methyl cellulose, hydroxypropyl methyl cellulose, or carboxyalkyl cellulose, preferably carboxymethyl cellulose.

5. The curable composition of claim 1 to 4, wherein the thickener is present in the curable composition from 0.01 to 3 weight percent (based on dry mass), preferably from 0.05 to 0.1weight percent (based on dry mass).

6. The curable composition of claim 1 to 5, wherein the composition comprises carbon black.

7. The curable composition of claim 6, wherein the carbon black is present in the curable compositions from 10 to 50 weight percent (based on dry mass), preferably from 20 to 40 weight percent (based on dry mass).

8. The curable composition of claim 6 or 7, wherein the carbon black has particle size of 70nm or less, preferably from 5nm to 70nm, most preferably from 10nm to 30nm.

9. The curable composition of claim 1 to 8, wherein the acid is phosphoric acid.

10. The curable composition of claim 1 to 9, wherein the salt is an amine-acid salt.

11. The curable composition of claim 1, wherein the acid is an oxygenated acid selected from the group consisting of phosphoric acid, pyrophosphoric acid, phosphorus acid, sulfuric acid, sulfurous acid, nitric acid, boric acid, hypochloric acid, and chlorate acid.

12. The curable composition of claim 1, wherein the acid is a non-oxygenated acid selected from the group consisting of hydrochloric acid, hydrogen sulfide, and phosphine.

13. The curable composition of claim 1, wherein an aldehyde is used with the salt.

14. The curable composition of claim 1, wherein the reducing sugar is reducing monosaccharide, disaccharide or polysaccharide.

15. The curable composition of claim 14, wherein the aldehyde is glucose.

16. A process for binding fiberglass comprising applying to fiberglass a curable composition comprising:
(i) an aldehyde or ketone and
(ii) an amine salt of an inorganic acid
wherein
(iii) the aldehyde is a reducing sugar,
(iv) the amine is a di-functional primary or secondary amine, the amine is a diamine having at least one primary amine group,
(v) the composition comprises a thickener and/or rheology modifier and
(vi) the glass fibers are a fibrous substrate being a woven or non-woven material which comprises filaments, chopped fibers, staple fibers or mixtures thereof,
and thereafter curing said composition while present on said fiberglass.

17. A formaldehyde-free fiberglass product formed by the process of claim 16.

18. The fiberglass product according to claim 17, wherein the product is a facer material.

## Patentansprüche

1. Härtende Zusammensetzung zur Verwendung beim Binden von Glasfaser, umfassend
(i) einen Aldehyd oder Keton und
(ii) ein Aminsalz einer anorganischen Säure erhältlich durch Umsetzung des Amins mit der Säure in Wasser wobei das Molverhältnis von Säurefunktionalität zu Aminfunktionalität 1:2 bis 2:1 beträgt
wobei
(iii) das Aldehyd ist ein reduzierender Zucker und das Molverhältnis von Salz zu Carbonyl beträgt 1:10 bis 10:1 und
(iv) das Amin ist ausgewählt aus der Gruppe bestehend aus Ethylendiamin, 1,3-Propandiamin, 1,4-Butandiamin, 1,5-Pentandiamin, 1,6-Hexandiamin und Mischungen davon
(v) die Zusammensetzung ein Verdickungsmittel und/oder Rheologie-Modifizierer umfasst.

2. Härtende Zusammensetzung nach Anspruch 1, wobei das Verdickungsmittel auf Polysacchariden, vorzugsweise Xanthan-Gummi, Guar Gummi, geänderten Stärken, neutralisierten Polyacrylsäuren, Cellulose-Derivaten, Polyacrylamiden und/oder Polyvinylalkoholen basiert.

3. Härtende Zusammensetzung nach Anspruch 1 oder 2, wobei das Verdickungsmittel ein durchschnittliches Molekulargewicht von mindestens etwa 100.000 und am typischsten kleiner als etwa 2.000.000, am meisten bevorzugt von mindestens etwa 200.000 und am typischsten kleiner als etwa 1.000.000.

4. Härtende Zusammensetzung nach Anspruch 1 bis 3, wobei das Verdickungsmittel auf Hydroxyalkylzellulose, vorzugsweise Hydroxyethylzellulose, Hydroxypropylzellulose, Hydroxyethylmethylzellulose, Hydroxypropylmethylzellulose, oder Carboxyalkylzellulose, vorzugsweise Carboxymethylzellulose basiert.

5. Härtende Zusammensetzung nach Anspruch 1 bis 4, wobei das Verdickungsmittel in der härtenden Zusammensetzung zu einem Anteil von 0,01 bis 3 Gewichtsprozenten (basierend auf Trockenmasse), vorzugsweise von 0,05 bis 0,1 Gewichtsprozent (basierend auf Trockenmasse) vorliegt.

6. Härtende Zusammensetzung nach Anspruch 1 bis 5, wobei die Zusammensetzung Ruß umfasst.

7. Härtende Zusammensetzung nach Anspruch 6, wobei der Ruß in der härtenden Zusammensetzung zu einem Anteil von 10 bis 50 Gewichtsprozenten (basierend auf Trockenmasse), vorzugsweise von 20 bis 40 Gewichtsprozenten (basierend auf Trockenmasse) vorliegt.

8. Härtende Zusammensetzung nach Anspruch 6 oder 7, wobei der Ruß eine Partikelgröße von 70 nm oder geringer aufweist, vorzugsweise von 5 nm bis 70 nm, am meisten bevorzugt von 10 nm bis 30 nm.

9. Härtende Zusammensetzung nach Anspruch 1 bis 8, wobei die Säure eine Phosphorsäure ist.

10. Härtende Zusammensetzung nach Anspruch 1 bis 9, wobei das Salz ein Amino-Säure-Salz ist.

11. Härtende Zusammensetzung nach Anspruch 1, wobei die Säure eine oxygenierte Säure ist, die ausgewählt ist aus der Gruppe bestehend aus Phosphorsäure, Pyrophosphorsäure, Phosphorsäure, Schwefelsäure, schwefelige Säure, Salpetersäure, Borsäure, hypochlorige Säure, und Chloratsäure.

12. Härtende Zusammensetzung nach Anspruch 1, wobei die Säure eine nichtoxygenierte Säure ist, die ausgewählt ist aus der Gruppe bestehend aus Salzsäure, Wasserstoffsulfid, und Phosphin.

13. Härtende Zusammensetzung nach Anspruch 1, wobei ein Aldehyd mit dem Salz verwendet wird.

14. Härtende Zusammensetzung nach Anspruch 1, wobei der reduzierende Zucker ein reduzierendes Monosaccharid, -Disaccharid oder -Polysaccharid ist.

15. Härtende Zusammensetzung nach Anspruch 14, wobei der Aldehyd Glukose ist.

16. Verfahren zum Binden von Glasfaser, umfassend das Aufbringen einer härtenden Zusammensetzung auf Glasfaser, umfassend
(i) einen Aldehyd oder Keton und
(ii) ein Aminsalz einer anorganischen Säure
wobei
(iii) das Aldehyd ist ein reduzierender Zucker
(iv) das Amin ein difunktionales Primäres- oder Sekundäres-Amin ist, das Amin ein Diamin mit mindestens einer Primären-Amin-Gruppe ist
(v) die Zusammensetzung ein Verdickungsmittel und/oder Rheologie-Modifizierer umfasst
(vi) die Glasfasern sind ein faseriges Substrat, das ein gewebtes oder nicht gewebtes Material ist, das Filamente, geschnittene Fasern, Stapelfasern oder Gemische davon umfasst
und danach Aushärten der besagten Zusammensetzung, während sie an besagter Glasfaser vorhanden ist.

17. Formaldehyd-freies Glasfaserprodukt, gebildet durch das Verfahren nach Anspruch 16.

18. Glasfaserprodukt nach Anspruch 17, wobei das Produkt ein Facer-Material ist.

## Revendications

1. Composition durcissable pour utilisation dans la liaison de fibres de verre comprenant
I. un aldéhyde ou cétone et
II. un sel d'amine d'un acide inorganique obtenu par la réaction de l'amine avec l'acide dans l'eau où le rapport molaire de fonctionnalité acide à fonctionnalité aminé est de 1:2 à 2:1
où
III. l'aldéhyde est un sucre de réduction et le rapport molaire de sel à carbonyle est de 1:10 à 10:1 et,
IV. l'amine est sélectée du groupe formé d'éthylène diamine, 1,3-propanediamine, 1,4-butanediamine, 1,5-pentanediamine, 1,6-hexanediamine, et les mélanges de ceux-ci,
V. la composition comprend un agent épaississant et/ou modificateur rhéologique.

2. Composition durcissable selon la revendication 1, où l'agent épaississant est basé sur polysaccharides, préférablement gomme de xanthane, gomme de guar, amidons modifiés, acides polyacryliques neutralisés, dérivés de cellulose, polyacrylamides et/ou alcools polyvinyliques.

3. Composition durcissable selon la revendication 1 ou 2, où l'agent épaississant présente un poids moléculaire moyen d'au moins environ 100.000 et le plus typiquement au dessous d'environ 2.000.000, plus préférablement d'au moins environ 200.000 et le plus typiquement au dessous d'environ 1.000.000.

4. Composition durcissable selon la revendication 1 à 3, où l'agent épaississant est basé sur hydroxyalkyl cellulose, préférablement hydroxyéthyl cellulose, hydroxypropyl cellulose, hydroxyéthyl méthyl cellulose, hydroxypropyl méthyl cellulose, or carboxyalkyl cellulose, préférablement carboxyméthyl cellulose.

5. Composition durcissable selon la revendication 1 à 4, où l'agent épaississant est présent dans la composition durcissable dans un pour cent en poids de 0,01 à 3 (basé sur la masse sèche), préférablement dans un pour cent en poids de 0,05 à 0,1 (basé sur la masse sèche).

6. Composition durcissable selon la revendication 1 à 5, où la composition comprend noir de fumée.

7. Composition durcissable selon la revendication 6, où le noir de fumée est présent dans les compositions durcissables dans un pour cent en poids de 10 à 50 (basé sur la masse sèche), préférablement dans un pour cent en poids de 20 à 40 (basé sur la masse sèche).

8. Composition durcissable selon la revendication 6 ou 7, où le noir de fumée présente la taille de la particule de 70 nm ou moins, préférablement de 50 nm à 70 nm, le plus préférablement de 10 nm à 30 nm.

9. Composition durcissable selon la revendication 1 à 8, où l'acide est acide phosphorique.

10. Composition durcissable selon la revendication 1 à 9, où le sel est un sel d'acide aminé.

11. Composition durcissable selon la revendication 1, où l'acide est un acide oxygéné sélecté du groupe formé d'acide phosphorique, acide pyrophosphorique, acide phosphoré, acide sulfurique, acide sulfuré, acide nitrique, acide borique, acide hypochlorique, et acide de chlorate.

12. Composition durcissable selon la revendication 1, où l'acide est un acide non-oxygéné sélecté du groupe formé d'acide hydrochlorique, sulfure d'hydrogène, et phosphine.

13. Composition durcissable selon la revendication 1, où un aldéhyde est utilisé avec le sel.

14. Composition durcissable selon la revendication 1, où le sucre de réduction est monosaccharide, disaccharide ou polysaccharide de réduction.

15. Composition durcissable selon la revendication 14, où l'aldéhyde est glucose.

16. Procédé pour lier les fibres de verre comprenant appliquer aux fibres de verre la composition durcissable comprenant
I. un aldéhyde ou cétone et
II. un sel d'amine d'un acide inorganique
où
III. l'aldéhyde est un sucre de réduction,
IV. l'amine est une amine primaire ou secondaire di-fonctionnelle, l'amine est une diamine ayant au moins un groupe amine primaire,
V. la composition comprend un agent épaississant et/ou modificateur rhéologique et
VI. les fibres de verre sont un substrat fibreux étant un matériau tissé ou non tissé qui comprend des fragments, des fibres coupées, des fibres discontinues ou les mélanges de ceux-ci,
et ensuite durcir ladite composition présente sur lesdites fibres de verre.

17. Produit en fibre de verre sans formaldéhyde formé par le procédé de la revendication 16.

18. Produit en fibre de verre selon la revendication 17, où le produit est un matériau de revêtement.
